# EUROPEAN PATENT SPECIFICATION

(11) **EP 1 428 403 B1**
(45) Date of publication and mention of the grant of the patent: **04.09.2013**
(21) Application number: 02767632.9
(22) Date of filing: 11.09.2002
(51) Int. Cl.: H04W 12/02, H04W 12/04

(54) **COMMUNICATIONS METHODS, SYSTEMS AND TERMINALS**
KOMMUNIKATIONSVERFAHREN, SYSTEME UND ENDGERÄTE
PROCEDES, SYSTEMES ET TERMINAUX DE COMMUNICATION

(30) Priority: 11.09.2001 GB 0121979
(43) Date of publication of application: 16.06.2004
(73) Proprietor: Motorola Solutions, Inc., Schaumburg IL 60196 (US)
(72) Inventor: CHATER-LEA, David, J., Basingstoke, Hampshire RG22 4PD (GB); SHAHAF, Mark, 67899 Tel Aviv (IL)
(74) Representative: Treleven, Colin
(86) International application number: PCT/GB2002/004138
(87) International publication number: WO 2003/024140

(56) References cited:
- US-A- 5 357 571
- "Terrestrial Trunked Radio (TETRA);Voice plus Data (V+D); Part 7: Security; 3 Definitions, symbols and abbreviations; 4.2 Air Interface key management mechanisms; 4.5 OTAR Protocols; A.2 OTAR PDUs" ETSI EN 300392-7 V2.1.1, XX, XX, 16 February 2001 (2001-02-16), pages ,12-15,21-28,47-65,110-115, XP002224025
- PARKINSON D W: "TETRA SECURITY" BT TECHNOLOGY JOURNAL, BT LABORATORIES, GB, vol. 19, no. 3, July 2001 (2001-07), pages 81-88, XP001096932 ISSN: 1358-3948

## Description

### Field of the Invention

This invention relates to communications methods, systems and terminals. In particular, it relates to use of encryption in such communications methods, systems and terminals, especially for mobile communications.

### Background of the Invention

Mobile radio communications systems, for example cellular telephony or private mobile radio communications systems, typically provide for radio telecommunication links to be arranged between a plurality of subscriber units, often refrred to in the art as mobile stations (MSs). The term mobile station (MS) generally includes both hand-portable and vehicular mounted radio units, radiotelephones and like radio communications units.

Mobile radio communications systems are distinguished over fixed communications systems, such as the public switched telephone networks (PSTN), principally in that mobile stations can move in geographical location to accompany their user and in doing so encounter varying radio propagation environments. Mobile radio communications systems and mobile stations used in them may operate in one of two main modes, namely trunked mode of operation (TMO) and direct mode of operation (DMO). TMO communications use the infrastructure supplied by the system operator, e.g. base transceiver stations (BTSs), to deliver communications from one terminal, e.g. the MS of one user or operator, to that of one or more others terminals, e.g. the MS of one or more other users. In contrast, DMO is a method that provides the capability of direct communication between two or more MSs without any associated operator's infrastructure. Some MSs may be dual mode operating using either TMO or DMO as appropriate.

In a TMO radio communications system, each BTS has associated with it a particular geographical coverage area (or cell). The cell defines a particular range over which the BTS can maintain acceptable communications with MSs operating within the cell. Often cells are combined to produce an expanded system coverage area. Furthermore, cells are often grouped into location areas for the purposes of tracking a MS within the coverage area whilst minimising location-updating signalling. In a TMO system, the information, which is user information, is known as information said to be contained in the 'U-plane' (or User Plane) of the system protocol stack, and is independent of the control information used by the system said to be contained in the 'C-plane' (or Control Plane) of the system protocol stack.

In the field of this invention it is known that systems such as those operating according to the TETRA (TErrestrial Trunked Radio) standards, employ air interface (AI) encryption technology. The TETRA standards are operating procedures or protocols which have been defined by the European Telecommunications Standards Institute (ETSI). Furthermore, such systems which are TMO systems can support an additional layer of encryption that is termed end-to-end encryption. The process is known as "end-to-end" as it can only be applied by the sender (source) of the information and removed by the recipient (destination) of the information. To achieve this end-to-end encryption process, encryption keys used by the transmitting terminal and the receiving terminal must be the same.

End-to-end encrypted communication between MSs in TMO is carried out transparently (without modification) through the infrastructure and across the air interfaces of the system, and decryption is carried out only by the MS of the recipient of the information. In other words, the system network and its intervening component installations, such as BTSs, BSCs etc.(described further later), through which the encrypted transmissions pass, do not possess the encryption keys. Hence, these installations cannot decrypt and recover the information being transmitted.

Encryption and decryption is also Known in DMO systems and in this case the secure communication method uses both end-to-end and air interface encryption.

An encryption key is generally defined as information, typically a sequence of random or pseudorandom binary digits, used initially to set up and periodically change the operations performed in crypto-equipment. Such keys are used to encrypt or decrypt electronic signals, or to determine electronic counter-countermeasures patterns, for example frequency hopping or spread spectrum, or for producing other keys. In the art, the term "key" is often used to encompass the terms "variable key", "key(ing) variable" and "crypto-variable."

Where two or more users in a TMO or DMO system employ end-to-end encryption for communication between themselves, they must use the same encryption key that the sender will use to encrypt the information, and the recipient(s) will use the same key to decrypt the information. The identical keys used by sender and recipient are known as a shared key. In practice, the shared key is stored in a secure memory of each MS which is to be a member of a secure talk group. Shared key encryption is a known operational process which is appropriate to be employed for example in a TETRA communications system.

In order to maintain security of encrypted communications, it is desirable to change the encryption key regularly (and the change frequency is dictated by system security policy). This is to prevent an adversary discovering an encryption key, either by analysis of the material encrypted with that key, or by some other means of discovery, such as stealing the key from one of its users.

The TETRA standards in TMO support use of various protocols for control and delivery of communications between a Switching and Management Infrastructure (SwMI) and the mobile stations (MSs). The protocols have different layers, in a similar manner to the separate layers described above. The Medium Access Control (MAC) layer, which is the lower part of Layer-2 of the C-plane of the protocol stack, uses addressing to distinguish one MS from another. Each MS is given a unique Layer-2 MAC address or identification code. The MAC address does not provide any confidentiality, but does allow the transmissions, both to and from different MSs, to be distinguished.

An encryption system using encryption keys as described above provides confidentiality of communicated information. It also prevents an adversary providing false information to communicating MSs, as the adversary does not have the key to encrypt the information correctly. However, since the information has to pass through insecure channels in both TMO and DMO, it could be subject to misuse. For example, an adversary could record an encrypted transmission and play this back later to the same users (whilst the encryption key was still valid) or to different users who are also using the same key.

A mechanism known to those skilled in the art to prevent this kind of security attack is to provide a timing signal, which is trusted to each of the parties sharing an encryption key. The MS of each such user combines the timing signal with the previously agreed shared key to generate a new shared encryption key, and the new key is used to encrypt the information. If a transmission is intercepted and replayed at a later time, the timing signal will not match the current timing signal in use by receiving MSs, and so the information can no longer be correctly decrypted.

An alternative security attack that could be attempted by an adversary is redirection of messages. If the adversary is able to intercept an end-to-end encrypted message in transmission, either in the SwMI (in a TMO system) or over the air interface, he could redirect it such that it appears to have originated from a different transmitting party. Although the adversary could not change the contents of the message, he could cause confusion if the message, when received, appears to have originated from the incorrect MS.

A procedure known in the art for preventing this kind of attack is to confirm the identity of the sender of a message by agreeing unique encryption keys for each possible originator/destination pair for a message. Thus, if a message has been mis-directed, it will be encrypted with the wrong key for the communication, and will not be recoverable. This approach suffers from the disadvantage that a different key pair is needed for each pair of users. This provides a large key management problem that needs to be solved. In addition, it cannot be used in group communications where the same message is simultaneously sent to a group of (three or more) recipients. For group communications, each user could use a unique key for transmission, thus allowing recipients of the message to confirm the identity of the sender by the key that he is using. However, all group members would have to hold a complete set of keys for all other group members, which in turn would provide a large key management problem to be solved.

Secondly, it is possible to confirm an identity of the sender of a message by using a keyed electronic signature with the message. Such an approach can be acceptable for data messages, but not for speech communication. Electronic signatures are very difficult to employ satisfactorily in a real time and 'unbounded length' speech communication system. The whole message should be signed if possible, which means that recipients would not receive confirmation of the sender's identity until the recipient processes the end of the message and can then check the electronic signature. In any case, receiving the complete message is often not possible in a mobile radio system where fading can cause parts of a communication to be lost.

In an alternative approach, smaller speech segments could be confirmed. However, a more frequent confirmation of messages requires extra bandwidth (and processing) overhead to send, encode/encrypt and decode/decrypt the messages.

In addition, a private mobile radio TMO system that employs unique encryption keys whilst supporting hundreds of individual MSs would be required to manage many individual and shared keys.

In US 5,357,571 a method is described in which a group of users are allowed to share a common key for encryption of communications amongst the group. The aim of the method described is to provide additional private communications besides those available amongst the group. Pairs of individuals of the group are additionally allowed to achieve privacy from other members of the same group, who possess the common key, when having individual communications. A predetermined function is used as an encryption key modifier. The predetermined function is a secret agreed between the two parties before communications. Alternatively, if the predetermined function is known, the identities are held secret. An example of the function specified for use as the key modifier is a secret unique code entered by an operator of the transmitting terminal and received by an operator of the receiving terminal.

A need therefore exists for an improved end-to-end encrypted communications system and method and terminal for use therein, in which the abovementioned disadvantages may be alleviated and the likelihood of security of communications resulting is increased.

### Summary of invention

In accordance with the present invention in a first aspect there is provided a method of encrypting in accordance with claim 1 of the accompanying claims.

In accordance with the present invention in a second aspect there is provided a method of decrypting in accordance with claim 2 of the accompanying claims.

In the method of the first or second aspect the step of combining may include applying one or more of the following signal combination functions to combine the identifier code with the shared key: exclusive OR function (XOR), addition, multiplication.

The step of combining the said identifier defined in claim 1 or claim 2 with the shared key may be one of a plurality of modifications of the shared key to provide the encryption key. Another modification step may be applied before and/or during and/or after the combination of the identifier with the shared key. The additional modification step(s) may for example include one or more of the key modification steps known in the art. An example of another modifier for use in the modification procedure is the carrier number or frequency in use. Alternatively, the encryption procedure may be different for transmissions on different frequencies as known in the art.

According to the present invention in a third aspect there is provided a method of communication between a transmitting terminal and one or more remote receiving terminals which method is as defined in claim 3 of the accompanying claims.

In the method according to the third aspect, communications sent between the terminals including the transmitting terminal and the one or more receiving terminals may be wireless communications. The terminals may be operable in a mobile communications system and one or more of the terminals may therefore be mobile stations. The transmitting terminal and/or one or more of the receiving terminals may be a mobile station. The transmitting terminal or the receiving terminal or one of the receiving terminals may be a fixed terminal, e.g. used or operated by a system use manager.

In the method according to the third aspect of the invention, preferably the shared key is received and stored by the terminals prior to the start of the combining step of the encryption or decryption method. The shared key may be issued separately by or under the control of a system manager. This might be a manager of the communications system, or someone in charge of managing encryption within the communications system. The keys required by members of a particular defined secure group may be dispensed manually and used manually, e.g. by manually programming the terminal with the key, or they can be be delivered by secure communication, e.g. wireless communication using an over the air rekeying mechanism (both methods are well known per se in the art). Where each terminal in the group is to be programmed manually with the shared key information, e.g. in the form of a code comprising binary digits representing numerals, letters or other symbols or a combination of these, the information may be entered into the terminal by a user or operator of the terminal using a known interface such as a set of keys provided on a keyboard on the terminal.

The shared key may be stored by a terminal, e.g. a mobile or fixed station, in a known manner. The key may be stored either in a secure memory in the terminal (a memory that is not normally accessible to the outside world), or in a secure memory in a special encryption module. For air interface encryption (and the SCK in DMO as described later), use in a mobile station of a secure memory is preferred. For end-to-end encryption, use of an encryption module is preferred. In either case, the shared key may be stored on an associated device, e.g. a smartcard (e.g. a SIM, or Subscriber Identity Module) instead.

In the method according to the third aspect of the invention, the identifier of the transmitting terminal ('transmitter ID') may be transmitted by the transmitting terminal by wireless communication to the one or more receiving terminals. The transmitter ID may be stored in a non-volatile memory of the transmitting terminal, which may or may not be a secure memory. The transmitter ID may be transmitted as part of normal over-the-air system control signalling. This ID communication is normally outside the encrypted part of the message, at least the part involving use of the modified key provided by modification of the shared key by the transmitter ID in accordance with the invention. Each receiving terminal is thereby able to recognise and extract the transmitter ID. The transmitter ID may be, according to the protocol used, e.g. the TETRA protocol, included in a pre-defined position in the structure of the control signalling. The ID might be in the same or different places in different signalling frames, depending on the message, but the ID may always be included somewhere in the control signaling and the receiving terminal may, according to the protocol used, always know where to look for the transmitter ID. The receiving terminal may store the received transmitter ID in its own memory prior to use in the decryption procedure.

Alternatively, the transmitter ID may be transmitted in a separate encrypted message. Such a message has to be by a means that does not require the individual ID to be used in the decryption process. In TMO, an end-to-end encryption system could present the ID to the receiving terminal encrypted with air interface encryption, so that the receiver could use air interface encryption-decryption to decode the ID, then use the ID to generate the final key to be used in end-to-end encryption as described earlier.

In a form of the method according to the first, second or third aspect of the invention, the method further includes the steps of (i) notifying a changed manner of combining to communication terminals operating in said wireless communication system and holding the shared key; and (ii) using the changed manner of combining to encrypt and/or decrypt communications between the terminals. The notifying may be carried out by wireless communication, especially secure (encrypted) communication. The notifying may be by a system manager and may be sent by wireless communication.

In the method according to the third aspect of the invention each of the terminals holding the shared key may be capable of sending encrypted transmissions by the method according to the first aspect of the invention and decrypting received encrypted communications by the method according to the second aspect of the invention the encryption and decryption being by corresponding procedures using the same encryption/decryption key.

The method according to the first, second or third aspect of the invention may be applied in a system which operates according to TETRA standard procedures.

In the method according to the invention in the first second or third aspect, the communication system concerned may be operable in a trunked mode of operation (TMO). In such a mode the system will also include and operate using fixed system installations, e.g. one or more base transceiver stations and a switching and management infrastructure.

The method according to the invention in the first, second or third aspect may operate in a system that uses air interface encryption, so that the encryption procedure and transmitter ID are applied at the same layer in a communications protocol stack.

Alternatively, the method according to the invention in the first, second or third aspect may operate in a system that uses end-to-end encryption, so that the transmitter ID is applied by the transmitting terminal in a first layer of a system protocol stack or hierarchy and encryption protocols are in a second layer of the system protocol stack or hierarchy such that the step of combining the transmitter ID and shared key in the encryption and decryption procedures binds the two protocol layers for encrypted communications.

In the method according to the first, second or third aspect of the present invention, the system may be operable in a direct mode of operation (DMO) wherein terminals, especially mobile stations, can communicate directly rather than via an intermediate terminal such as a BTS. In this case, the shared key may comprises a static cipher key (SCK). By a 'static' cipher key is meant that the key is loaded into the terminal as a key to use, rather than being dynamically derived from some other process, and that it will be changed only by a key replacement procedure relatively infrequently (1 month to 1 year are typical expected values of key life). It is referred to as 'static' to distinguish it from some other keys used in communication systems such as TETRA systems which are much more dynamic, such as the keys referred to in the art as the 'derived cipher key', which is a by-product of authentication process, and the 'common cipher key' which is intended to be replaced and a new key sent to terminals (MSs) by the system very frequently (e.g. every 24 hours). The static cipher key may be input in a terminal such as a MS by a user of the terminal, e.g. via a keyboard on the MS, and may be stored in a memory in the manner described earlier.

Where the system in which the invention is applied comprises a DMO system, the system and the MSs and methods of establishing secure communications used therein may be as described in the Applicant's copending UK patent application no. 0121236.4 filed September 1st 2001 (publication number GB-A-2379361).

According to the present invention in a fourth aspect there is provided a mobile communication system comprising a plurality of terminals at least one of which is a mobile station, each terminal being adapted to perform the method according to the first, second or third aspect of the invention.

According to the present invention in a fifth aspect there is provided a terminal, e.g. a mobile station, for mobile radio communications and operable to perform the method according to the first, second or third aspect.

The terminal, e.g. mobile station, according to the fifth aspect may comprise:
a radio transmitter for transmitting an encrypted message;
memory means for storing a shared key associated with a group of which the terminal is a member, and for storing an identifier identifying the terminal, the identifier being a Medium Access Control (MAC) address given to the transmitting terminal;
a processor, operably coupled to said transmitter and said memory means, operable to generate a modified encryption key from a combination of the shared key and the identifier; and
and encrypting means for encrypting said message using said modified encryption key. The terminal, e.g. mobile station, may alternatively or in addition comprise:
a receiver for receiving an encrypted message;
memory means for storing a shared key associated with a group of which the terminal is a member and for storing an identifier identifying a terminal that sent the message, the identifier being a Medium Access Control (MAC) address given to the terminal that sent the message;
a processor, operably coupled to said receiver and said memory means, operable to generate a modified encryption key from a combination of the shared key and the identifier; and
decryption means for decrypting the message using the modified encryption key.

The terminal, e.g. mobile station, according to the fifth aspect of the invention may include, as means for conducting secure communication, a processor for using the current encryption key produced as in the method according to the first aspect described earlier to convert signals representing input information applied by a user or from a peripheral device associated with the radio unit, e.g. signals representing speech, text data or picture information, into encrypted signals for transmission to one or more designated other terminals. The processor may operate in a known manner, e.g. by generating using the input encryption key, and optionally an input time stamp signal, a crypto (key stream) sequence and applying the same to a signal combiner together with a signal representing the information in plain form to be converted by the signal combiner to an encrypted form. The signal combiner may operate an exclusive OR fuction or a multiplication or an addition of the combined signals or a combination of two or more of these functions. The processor may be part of a common processing unit of the communications unit, e.g. together with a processor for applying a corresponding reverse algorithm to provide decryption of a received signal.

By the invention, cryptographic binding of a message to the identity of a transmitting terminal is beneficially provided. For example, in a TETRA system, the encryption method of the invention binds the end-to-end encrypted transmission to the identity used in the MAC address C-plane of the transmitting terminal. This binding is done without any signalling, processing or timing overhead. Additionally, the invention prevents an intervening party from interfering with an encrypted transmission sent from one terminal to another in a manner such that the message would appear to a recipient that it originated from a party other than the true originating party.

Another advantage of the invention, particularly relevant in a DMO system, is that each transmitting terminal will be transmitting with a different effective encryption key, since the transmitter ID is used in the composition of each modified encryption key. This will increase the security of the system by reducing the probability of the encryption procedure being discovered from a repeat in the keystream used.

The present invention is suitable mainly for use to provide secure speech communications between users in a mobile communications system. However, the inventors of the present invention envisage alternative or additional uses of the invention. For example, the invention could be applied in an internet protocol (IP) data network, where the layer-3 source ID of a packet could be used as a key modifier in a transmission where the contents of the packet are encrypted. Furthermore, although the shared key used may relate to the identity of a call group for secure communications between terminals in a private or public mobile communication system, it is within the contemplation of the invention that the shared key may relate to any type of transmission, such as an emergency group call, pre-emptive priority call, an encrypted broadcast call or any other mobile radio communication where encryption is used, whether applicable to the TETRA standard or any other wireless communication technology.

The invention thus provides means for uniquely encrypting messages in the context of a point to point or point to multipoint transmission environment to provide communications, especially wireless communications, between users or operators of communication terminals in a pre-defined secure pairing or group. It operates by modifying a pre-established secret group encryption key shared by members of the pre-established group by combining with the shared encryption key an identification code defining the identity of the transmitting terminal to provide a modified encryption key unique to that transmitting terminal. It provides the following benefits:
(1) Any receiving terminal of the secure group can validate the transmission as originating from the transmitting terminal of the correct group member by knowledge of the secret shared key and the identity of that terminal. The secret shared key may have been previously recorded by the receiving terminal. The identity of that terminal may be transmitted in the form of an identification code in a communication from the transmitting terminal, which may comprise system control signalling associated with the encrypted transmission.
(2) No party outside the group can intercept group communications because of lack of knowledge of the secret shared key.
(2) No person outside the group can impersonate a member of the group by sending a message purporting to have originated by a member of the group, for example by redirecting or replaying an earlier message, as they will be unable to generate the actual unique key required to encrypt the transmission from a particular originating party.

This overcomes the weakness of prior art systems, where an adversary can replay or redirect messages which can then be perceived as valid by group members, even if the adversary is unable to understand the content of the message.
(3) Different layers of the protocol stack are cryptographically bound together, as the identity in the signalling layer of the transmitting terminal is bound to the message content. This makes it much harder for an intervening system to interfere with communications.
(4) The key lifetime of the secret shared key can be extended, as it is not directly used to encrypt communications. Key modification to extend key lifetime is known in the art, although the use of the transmitter ID in or as part of the key modification procedure with the resulting benefits, as described above, has not been previously used or suggested.

The main field of application of the invention is in mobile communications systems in which communications are by wireless (radio). It is noted that prior art encryption methods have been published for use not in this field but in other fields. For example, EP-A-0287720 describes a means of securing messages passed between individual terminals belonging to different groups. It is intended for individual communications and is aimed at the Electronic Funds Transfer at Point Of Sale (EFTPOS) area of the banking industry. This patent publication claims communication between "pairs of parties" (rather than groups). The method described provides a mechanism for individual communications between members of different groups. It specifically does not address communications between members of the same group. In contrast, the present invention provides a mechanism for group communications between members of the same group. The described method of EP-A-0287720 specifically is directed to an environment where terminals in one group have trust of terminals in the other group, but no need of trust between members of the same group. In fact, the scenario of EFTPOS is likely to provide an environment where there is explicitly no trust between members of the same group. In contrast, the invention provides an environment where members of the same group explicitly trust each other and explicitly have no trust of terminals outside this group.

Furthermore, EP-A-0287720 requires that each communicating party is provided by a separate key issuing entity with a unique key which is a derived function of the party's own identity sent to the party under a different key. This unique key must be provided in advance and cannot be calculated by that communicating party. The method of the invention does not require such a pre-provisioning of a unique key, and in fact given the dynamics of mobile communications systems (compared with a system using fixed terminals in a banking application) such a pre-provisioning would be unlikely to be acceptable to system operators.

EP-A-0989710 (JP-A-2000-156676) describes a method providing a facility for secure transmission of content between a content supplying host and a requesting terminal. It derives a key based on a terminal identity or terminal user generated passphrase, where the passphrase is also transmitted to the supplying host so that the host can generate the same key. This key is either used to encrypt content directly, or to exchange a content encryption key which in turn encrypts the content. A hash value of the key can be used to confirm the key in subsequent transactions.

The prior published method of EP-A-0989710 provides a means of protecting individual transfer of information between a fixed host and a fixed terminal. Unlike the invention, it explicitly does not provide group communications between members of a pre-defined secure group in a mobile communications system. In the prior published method, the user key is derived directly from the user identity or passphrase. It is not used as a key modifier. No initially secret key is used in generation of the user key. In contrast, both of these steps are used in the method of the invention.

In addition, it is clear that the method of EP-A-0989710 requires a secret key generation algorithm to generate the user key from the passphrase or identity. Otherwise, a person intercepting the transfer of the passphrase of identity would also be able to derive the key, making the transfer insecure. Alternatively, the transit network must offer another layer of security, including encryption, to protect the passphrase or identity in transit. The method of the invention needs neither of these: it utilises a secret group key, which conveniently allows the algorithm to be public knowledge, and allows the transmitter ID to be transferred without essential additional encryption. The operation of the invention is therefore very different in principle from that of the method described in EP-A-0989710.

Embodiments of the present invention will now be described by way of example only with reference to the accompanying drawings, in which:

### Brief Description of the Drawings

FIG. 1 shows a schematic block diagram of a TMO radio communications system that can be adapted to operate in accordance with embodiments of the present invention.
FIG. 2 shows a schematic block diagram of a known system hierarchical structure used in mobile communications.
FIG. 3 shows a schematic block diagram of a communication system hierarchical structure adapted for use in accordance with an embodiment of the present invention.
FIG. 4 shows a schematic block diagram of a mobile communications terminal embodying the present invention.
FIG. 5 shows a block diagram of an example of an encryption processor useful in the terminal shown in FIG 4.

### Description of embodiments of the invention

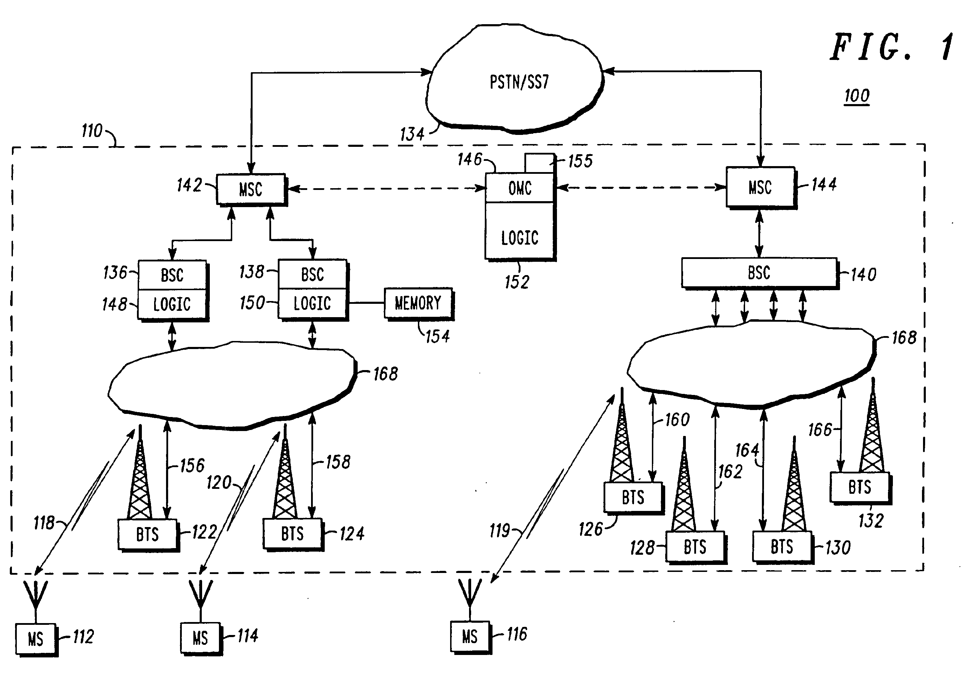

Referring first to FIG. 1, a TETRA radio communications system 100, which can be adapted to operate in accordance with one or more embodiments of the invention, is shown in outline. Generally, the air-interface protocol is administered from base transceiver stations of the system that are fixed and geographically spaced apart - one base station supporting a cell (or, for example, sectors of a cell).

A plurality of MSs 112-116 and fixed terminals (not shown), communicate over the selected air-interface 118-120 with a plurality of base transceiver stations (BTS) 122-132. A limited number only of MSs and BTSs, namely the MSs 112-116 and BTSs 122-132, are shown for clarity purposes.

The system infrastructure in a TETRA system is generally referred to as a switching and management infrastructure (SwMI). In FIG. 1 the system 100 includes a SwMI 110, which includes substantially all of the system operational elements apart from the mobile units. The BTSs 122-132 may be connected to a conventional public-switched telephone network (PSTN) 134 through base station controllers (BSCs) 136-140 and mobile switching centres (MSCs) 142-144.

Each BTS 122-132 is principally designed to serve its primary cell, with each BTS 122-132 containing one or more transceivers. The BTSs 122-132 communicate 156-166 with the rest of the system infrastructure via a frame relay interface 168.

Each BSC 136-140 may control one or more BTSs 122-132, with BSCs 136-140 generally interconnected through MSCs 142-144. The BSCs 136-140 are therefore able to communicate with one another, if desired, to pass system administration or control information therebetween, with BSCs 136-140 responsible for establishing and maintaining control channel and traffic channels to serviceable MSs 112-116 associated therewith. The interconnection of BSCs 136-140 therefore allows the trunked radio communication system to support handover of the MSs 112-116 between cells.

Each MSC 142-144 provides a gateway to the PSTN 134, with MSCs 142-144 interconnected through an operations and management centre (OMC) 146 that administers general control of the trunked radio system 100, as will be understood by those skilled in the art. The various system elements, such as BSCs 136-138 and OMC 146, will include control logic 148-152, with the various system elements usually having associated memory 154 (shown only in relation to BSC 138 for the sake of clarity). The memory typically stores historically compiled operational data as well as in-call data, system information and control algorithms.

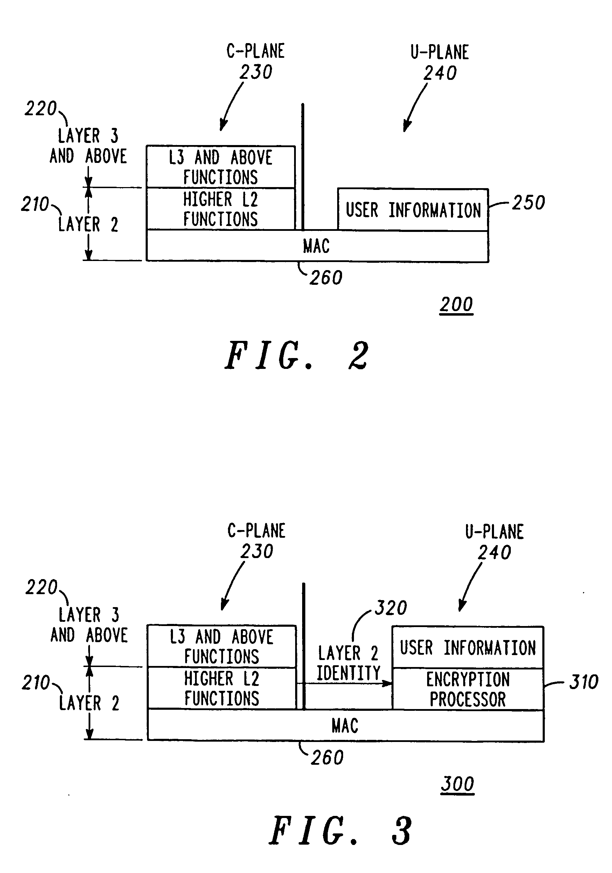

Referring now to FIG. 2, a block diagram of a known TMO system hierarchical structure or protocol stack 200 according to the well-known OSI protocol structure is shown. The hierarchical structure 200 is arranged in a number of layers. For the purpose of later describing the inventive concepts of the present invention, a layer '2' 210 and layer '3' and above 220 will be described now.

The information being routed, which is user information 250, is known as information contained in a 'U-plane' (or User Plane) 240 of the structure 200. The user information 250 is independent of system control information 230 contained in the 'C-plane' (or Control Plane) of the structure 200.

A Medium Access Control (MAC) layer 260 is in the lower part of Layer-2 of the C-plane 230 and U-plane 240. The MAC layer 260 uses addressing to distinguish one MS from another. Each MS operating in the system is given a unique Layer-2 MAC address. The MAC address does not provide any confidentiality, but does allow the transmissions, both to and from different MSs, to be distinguished.

Referring now to FIG. 3, a TMO communication system hierarchical structure 300 adapted in accordance with an embodiment of the present invention is shown. Items having the same reference numerals as those shown in FIG. 2 have the same function. As in the structure shown in FIG. 2, the information being routed in the structure 300, which is user information 250, is known as information contained in the 'V-plane' (or User Plane) 240 of the structure. The user information 250 is independent of control information 230 contained in the 'C-plane' (or Control Plane) of the structure 300. A Layer 2 MAC identity 320 of the MS of each sender of a transmission is passed to an encryption processing function 310. The encryption processing function 310 here represents application of an algorithm by each MS or other terminal participating in secure communications in the system to encrypt and decrypt transmissions. The encryption processing function 310 uses the Layer 2 identity 320, together with a secure shared key that is stored in memory, e.g. of each participating MSs, in a modification function to generate an actual transmission encryption key that can be used for encryption and decryption of the user information 250.

Thus, any sender or recipient of a secure transmission uses the sender's Layer-2 identity (ID) 320 in conjunction with the shared key, say a shared key of a particular group, e.g. a designated secure talk group, to produce an encryption key to enable transmissions between members of the group to be encrypted and/or decrypted. In this manner, if the transmission were received such that it appeared to have been sent from a different user not having the sender's identity, the transmission would not be able to be decrypted.

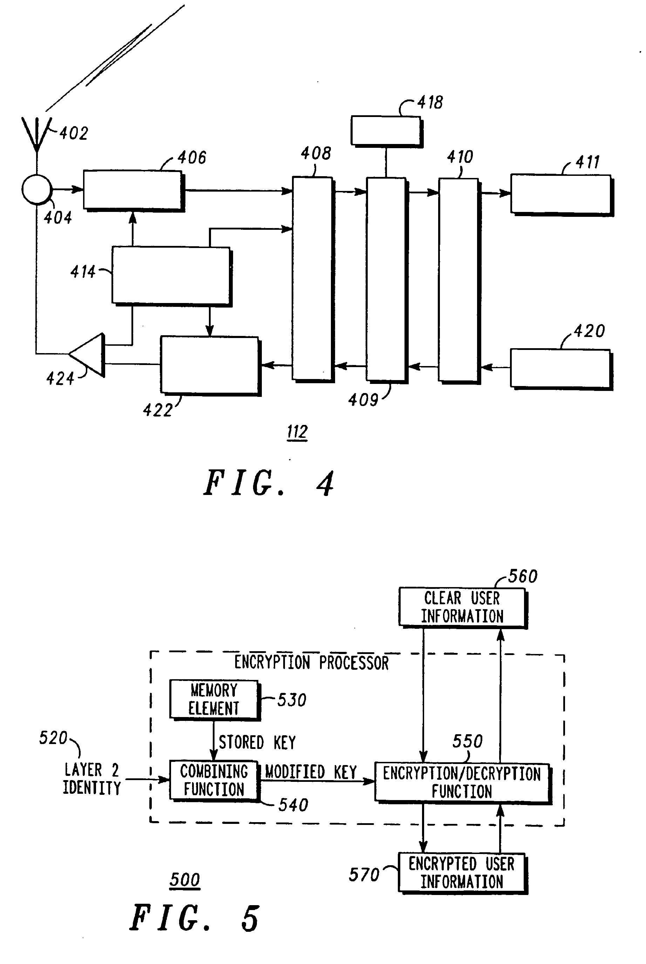

Referring now to FIG. 4, a block diagram of a subscriber unit which is a mobile station (MS) 112 adapted to operate using an embodiment of the present invention is shown. The MS 112 may be suitable for operating in a TMO (e.g. as illustrated in FIG. 1) or DMO depending on the mode selected.

The MS 112 includes an antenna 402 preferably coupled to a duplex filter or circulator 404 that provides isolation between receive and transmit chains within MS 112. The receiver chain includes a receiver front-end circuit 406 (effectively providing reception, filtering and intermediate or base-band frequency conversion). The front-end circuit 406 receives signal communications from another terminal, such as another MS, in its secure talk group. The front-end circuit 406 is serially coupled to a signal processor (generally realised by a digital signal processor, DSP) 408. The signal processor 408 performs signal demodulation, error correction and formatting, and recovers end-to-end encrypted information from the received signal. A signal representing the information recovered by the signal processor 408 is serially coupled to an encryption processor 409, the operation of which is further described later with respect to FIG. 5.

A timer 418 may be operably coupled to the encryption processor 409 to provide replay protection, in a known manner by key modification or other means, to the encryption process in addition to the modification procedure utilising the shared key and the identification code of the transmitter, e.g. the Layer 2 MAC transmitter identity as described with reference to FIG. 4.

As known in the art, received signals that have been decrypted by the encryption processor 409 are typically input to a baseband processing device 410, which takes the decrypted information received from the encryption processor 409 and formats it in a suitable manner to send to an output device 411, such as a speaker and/or display, e.g. a visual display unit (VDU).

In an alternative embodiment of the invention, the functions of the signal processor 408 and the baseband processing device 410 may be provided within the same physical device. The function of the encryption processor 409 may also be provided within the same physical device as either the signal processor 408 or the baseband processing function 410, or both.

A controller 414 controls the information flow and operational state of processors within the MS 112.

The MS 112 will not be able to decrypt a received encrypted transmission if the MS 112 does not possess the shared key, and the transmitter ID, e.g. Layer 2 identifier, of the sending MS, or if the transmission has been corrupted to affect the transmitter ID of the sending MS. In the latter case, the transmission would appear to have been sent from a different user, and therefore the transmission could not be decrypted. The MS 112 will also not be able to decrypt the encrypted transmission if it does not possess the correct combining function algorithm.

As regards the transmit chain of the MS 112, this essentially includes an input device 420, such as a microphone, coupled in series through a baseband processor 410, an encryption processing function 409, the signal processing function 408, transmitter/modulation circuitry 422 and a power amplifier 424. The processor 408, transmitter/modulation circuitry 422 and the power amplifier 424 are operationally responsive to the controller 414, with an output from the power amplifier 424 coupled to the duplex filter or circulator 404, as known in the art.

The transmit chain in the MS 112 takes the baseband signal from input device 420 and converts it into information that can be encrypted by the encryption processor 409. The encryption processor 409 encrypts this using an encryption key, which is a function of a shared key stored within the encryption processor 409 and a transmitter ID, e.g. Layer-2 MAC identity, which may be provided by the processor 408, or some other storage capable device within the MS 112. The encrypted information is then passed to the signal processor 408 where it is encoded for transmission by transmit/modulation circuitry 422 and power amplifier 424.

It is within the contemplation of the invention that the combining function used by encryption processor 409 could be any suitable combining function, such as an XOR, addition, multiplication etc, or any combination of such operations. Such combiners are well known per se. In addition, the encryption processor 409 could modify the shared key by one or more additional modification procedures (in addition to combination with the transmitter ID) as referred to earlier.

The signal processor 408 in the transmit chain may be implemented as distinct from the processor in the receive chain. Alternatively, a single processor 408 may be used to implement processing of both transmit and receive signals, as shown in FIG. 4.

Of course, the various components within the MS 112 can be realised in discrete or integrated component form, with an ultimate structure therefore being a selection from these forms.

Referring now to FIG. 5, an encryption processor 500, suitable for use as the processor 409 of Figure 4, is shown. The encryption processor 500 produces an encryption key which is used in a known manner in an encryption/decryption function 550 to encrypt and decrypt user communicated information, e.g. information contained within the U-plane illustrated in FIG. 3. The encryption key is a modified key produced (at least) by a combining function 540 in accordance with an embodiment of the invention.

The combining function 540 operates to combine two inputs as follows. A first input comprises a signal 520 representing the transmitter ID, e.g. Layer-2 MAC identity illustrated in FIG. 3, of the terminal sending a transmission. For encryption of a message to be transmitted by the MS 112 containing the processor 500, this is the identity of that MS, e.g. as obtained from a memory store. For decryption of a message from another MS this is the identity of that other MS, e.g. as recovered from control signalling sent by the other MS as described earlier. A second input comprises a stored shared key provided by a memory element 530. The stored shared key is being used by a particular secure talk group which includes the MS 112 including the processor 500.

The output of the combining function 540, as indicated above, is a modified key that is input to the encryption/decryption function 550. The encryption/decryption function 550 uses the modified key in a known way to apply an encryption algorithm to encrypt clear user information 560 to generate encrypted user information 570 or to apply a reverse encryption algorithm to decrypt encrypted user information 570 to generate clear user information 560 thereby allowing the original information to be recovered.

The encryption processor 500 may operate in a known manner as described earlier to combine the encryption key produced by the combining function 540 which may for example be in the form of a crypto (key stream) sequence with the clear user information 560 to produce the encrypted user information 570.

## Claims

1. A method of providing secure group communications in a communication system (100) between a plurality of terminals (112, 114, 116) employing an encryption protocol that uses a shared encryption key in each of the plurality of terminals in the group, the method including modifying a shared encryption key associated with the group in a transmitting terminal (112) to provide a modified encryption key and encrypting information to be transmitted by the transmitting terminal using the modified encryption key, wherein the shared encryption key is modified by combining the shared encryption key with an identifier (520) providing a unique identification of the transmitting terminal, **characterised in that**:
(i) the identifier (520) is a Medium Access Control (MAC) address given to the transmitting terminal (112); and
(ii) the identifier (520) is transmitted in control signalling by the transmitting terminal (112) by wireless communication to a plurality of receiving terminals (114, 116), and is extracted and recognised by the plurality of receiving terminals (114, 116).

2. A method of decrypting information in a group communication received at each of a plurality of receiving terminals (114, 116) from a transmitting terminal (112) in a communication system providing secure group communications between a plurality of terminals (112, 114, 116) in the group employing an encryption protocol that uses a shared encryption key associated with the group in each of the plurality of terminals (112, 114, 116), the method including providing in each of the plurality of receiving terminals (114, 116) a decryption key corresponding to an encryption key associated with the received encrypted message and decrypting the information using the decryption key, wherein the decryption key is provided by combining with the shared encryption key an identifier identifying the transmitting terminal (112), **characterised in that**:
(i) the identifier (520) is a Medium Access Control (MAC) address given to the transmitting terminal (112); and
(ii) the identifier is transmitted in control signalling by the transmitting terminal (112) by wireless communication to the plurality of receiving terminals (114,116) and is extracted and recognised by the plurality of receiving terminals (114, 116).

3. A method according to claim 1 which includes:
(i) the transmitting terminal (112) transmitting a communication including encrypted information which is encrypted by use of the modified encryption key; and
(ii) the receiving terminals (114, 116) receiving the communication and decrypting the encrypted information by use of a corresponding modified encryption key.

4. A method according to any one of the preceding claims and wherein the step of combining includes applying one or more of the following signal combination functions to combine the identifier with the shared key:
exclusive OR function (XOR), addition, multiplication.

5. A method according to any one of claims 1 to 4 and wherein the step of combining the said identifier with the shared key is one of a plurality of modifications of the shared key to provide the modified encryption or decryption key.

6. A method according to any one of claims 3 to 5 and wherein the communication sent between the terminals including the transmitting terminal (112) and the receiving terminals (114, 116) is a wireless communication.

7. A method according to claim 6 and wherein the terminals (112, 114, 116) are operable in a mobile communications system and one or more of the terminals (112) is a mobile station.

8. A method according to any one of the preceding claims 3 to 7 and wherein the shared key is received and stored by the terminals (112, 114, 116) prior to said combining.

9. A method according to claim 6, claim 7 or claim 8 and wherein the shared key is sent to the terminals (112, 114, 116) by an encrypted wireless communication.

10. A method according to any one of claims 6 to 9 and wherein the shared key comprises a code entered into each terminal (112, 114, 116) by a user or operator thereof.

11. A method according to any one of the preceding claims and wherein the shared key is stored in a secure memory (530) of the terminal or in an encryption module or on a device associated with the terminal.

12. A method according to any one of the preceding claims wherein the identifier is stored within a memory of the transmitting terminal (112) and is retrieved from the memory for transmission to the plurality of receiving terminals (114, 116).

13. A method according to any one of the preceding claims and wherein the identifier is transmitted as part of system control signalling in unencrypted form.

14. A method according to any one of claims 1 to 12 and wherein the identifier is transmitted in an encrypted message.

15. A method according to any one of the preceding claims 6 to 14, the method further including the steps of:
(i) notifying a changed manner of combining to communication terminals operating in said wireless communication system and holding the shared key; and
(ii) using the changed manner of combining to encrypt and/or decrypt communications between the terminals.

16. A method according to any one of claims 6 to 15 and wherein each of the terminals holding the shared key is capable of sending encrypted group transmissions encrypted using the method according to claim 1 and decrypting received encrypted group transmissions by the method according to claim 2.

17. A method according to any one of the preceding claims, and wherein the communication system (100) is operable in a trunked mode of operation (TMO).

18. A method according to any one of the preceding claims and wherein the method is used in a direct mode of operation (DMO).

19. A method according to any one of the preceding claims and wherein the shared key comprises a static cipher key.

20. A method according to any one of the preceding claims and wherein the system (100) uses air interface encryption, so that the encryption procedure and transmitting terminal identification are operating at the same layer in a communications protocol stack.

21. A method according to any one of claims 1 to 20 and wherein the system (100) uses end-to-end encryption, so that the transmitting terminal identification and the encryption procedure operate at different levels in the protocol stack, whereby the combining step binds the layers of the protocol stack together.

22. A method according to any one of the preceding claims and wherein the system (100) in which the method is applied operates according to TETRA standard procedures.

23. A mobile communication system (100) comprising a plurality of terminals (112, 114, 116) each adapted to perform the method according to any one of the preceding claims, wherein at least one of the terminals is a mobile station.

24. A system according to claim 23, and wherein the system (100) is operable in a trunked mode of operation (TMO).

25. A system (100) according to claim 23 or claim 24, and wherein the system is operable in a direct mode of operation (DMO).

26. A system (100) according to any one of claims 23 to 25 and wherein the shared key comprises a static cipher key.

27. A system (100) according to any one of claims 23 to 26 and wherein the system uses air interface encryption, so that the encryption procedure and transmitting terminal identification are operating at the same layer in a communications protocol stack.

28. A system (100) according to any one of claims 23 to 27 and wherein the system uses end-to-end encryption, so that the transmitting terminal identification and the encryption procedure operate at different levels in the protocol stack, whereby the combining step binds the layers of the protocol stack together.

29. A system (100) according to any one of claims 23 to 27 and wherein the system operates according to TETRA standard procedures.

30. A terminal (112) for radio communications and operable to perform the method according to any one of claims 1 to 22 or adapted for use in a system according to any one of claims 23 to 29.

31. A terminal (112) according to claim 30, the terminal comprising:
a radio transmitter (408, 422, 424, 402) for transmitting an encrypted group message;
memory means (530) for storing a shared key associated with a group of which the terminal is a member, and for storing an identifier (520) identifying the terminal, **characterised in that** the identifier is a Medium Access Control (MAC) address given to the transmitting terminal;
a processor (540), operably coupled to said transmitter and said memory means, operable to generate a modified encryption key from a combination of the shared key and the identifier; and
encrypting means (550) for encrypting said message using said modified encryption key.

32. A terminal (112) according to claim 30 or claim 31 and comprising:
a receiver (402, 406, 408) for receiving an encrypted group message;
memory means (530) for storing a shared key associated with a group of which the terminal is a member and for storing an identifier identifying a terminal that sent the message, **characterised in that** the identifier is a Medium Access Control (MAC) address given to the terminal that sent the message;
a processor (540), operably coupled to said receiver and said memory means, operable to generate a modified encryption key from a combination of the shared key and the identifier; and
and decryption means (550) for decrypting the message using the modified encryption key.

33. A terminal (112) according to any one of claims 30 to 32 and which is a mobile station.

## Patentansprüche

1. Verfahren eines Bereitstellens einer sicheren Gruppenkommunikation in einem Kommunikationssystem (100) zwischen einer Mehrzahl von Endgeräten (112, 114, 116) unter Verwendung eines Verschlüsselungsprotokolls, das einen gemeinsamen Verschlüsselungsschlüssel in jedem von der Mehrzahl von Endgeräten in der Gruppe verwendet, wobei das Verfahren umfasst: Modifizieren eines gemeinsamen Verschlüsselungsschlüssels, der mit der Gruppe verknüpft ist, in einem Sendeendgerät (112), um einen modifizierten Verschlüsselungsschlüssel zur Verfügung zu stellen, und Verschlüsseln von Informationen, die durch das Sendeendgerät übertragen werden sollen, unter Verwendung des modifizierten Verschlüsselungsschlüssels, wobei der gemeinsame Verschlüsselungsschlüssel durch ein Kombinieren des gemeinsamen Verschlüsselungsschlüssels mit einem Identifizierer (520) modifiziert wird, der eine eindeutige Identifizierung des Sendeendgerätes zur Verfügung stellt, **dadurch gekennzeichnet, dass**
(i) der Identifizierer (520) eine Mittelzugriffssteuerungsadresse (MAC = Mittelzugriffssteuerung) ist, die dem Sendeendgerät (112) zugewiesen wird; und
(ii) der Identifizierer (520) in einer Steuersignalisierung durch das Sendeendgerät (112) durch eine drahtlose Kommunikation an eine Mehrzahl von Empfangsendgeräten (114, 116) übertragen wird und durch die Mehrzahl von Empfangsendgeräten (114, 116) extrahiert und erkannt wird.

2. Verfahren eines Entschlüsselns von Informationen in einer Gruppenkommunikation, die bei jedem von einer Mehrzahl von Empfangsendgeräten (114, 116) von einem Sendeendgerät (112) in einem Kommunikationssystem empfangen werden, das eine sichere Gruppenkommunikation zwischen einer Mehrzahl von Endgeräten (112, 114, 116) in der Gruppe zur Verfügung stellt, unter Verwendung eines Verschlüsselungsprotokolls, das einen gemeinsamen Verschlüsselungsschlüssel, der mit der Gruppe verknüpft ist, in jedem Endgerät der Mehrzahl von Endgeräten (112, 114, 116) verwendet, wobei das Verfahren umfasst:
Bereitstellen in jedem Empfangsendgerät aus der Mehrzahl von Empfangsendgeräten (114, 116) eines Entschlüsselungsschlüssels entsprechend einem Verschlüsselungsschlüssel, der mit der empfangenen verschlüsselten Nachricht verknüpft ist, und Entschlüsseln, der Informationen unter Verwendung des Entschlüsselungsschlüssels, wobei der Entschlüsselungsschlüssel durch ein Kombinieren mit dem gemeinsamen Verschlüsselungsschlüssel eines Identifizierers,
der das Sendeendgerät (112) identifiziert, zur Verfügung gestellt wird, **dadurch gekennzeichnet, dass**:
(i) der Identifizierer (520) eine Mittelzugriffssteuerungsadresse (MAC = Mittelzugriffssteuerung) ist, die dem Sendeendgerät (112) zugewiesen wird; und
(ii) der Identifizierer in einer Steuersignalisierung durch das Sendeendgerät (112) durch eine drahtlose Kommunikation an eine Mehrzahl von Empfangsendgeräten (114, 116) übertragen und durch die Mehrzahl von Empfangsendgeräten (114, 116) extrahiert und erkannt wird.

3. Verfahren gemäß Anspruch 1, das umfasst:
(i) dass das Sendeendgerät (112) eine Kommunikation überträgt, die verschlüsselte Informationen umfasst, die unter Verwendung des modifizierten Verschlüsselungsschlüssels verschlüsselt werden; und
(ii) dass die Empfangsendgeräte (114, 116) die Kommunikation empfangen und die verschlüsselten Informationen unter Verwendung eines entsprechenden modifizierten Verschlüsselungsschlüssels entschlüsseln.

4. Verfahren gemäß einem der vorangehenden Ansprüche, wobei der Schritt eines Kombinierens ein Anwenden einer oder mehrerer der folgenden Signalkombinationsfunktionen umfasst, um den Identifizierer mit dem gemeinsamen Schlüssel zu kombinieren: exklusive ODER-Funktion (XOR), Addition, Multiplikation.

5. Verfahren gemäß einem der Ansprüche 1 bis 4, wobei der Schritt eines Kombinierens des Identifizierers mit dem gemeinsamen Schlüssel eine der Mehrzahl von Modifikationen des gemeinsamen Schlüssels ist, um die modifizierte Verschlüsselung oder den Entschlüsselungsschlüssel zur Verfügung zu stellen.

6. Verfahren gemäß einem der Ansprüche 3 bis 5, wobei die zwischen den Endgeräten, die das Sendeendgerät (112) und die Empfangsendgeräte (114, 116) umfassen, gesendete Kommunikation eine drahtlose Kommunikation ist.

7. Verfahren gemäß Anspruch 6, wobei die Endgeräte (112, 114, 116) in einem mobilen Kommunikationssystem betreibbar sind und ein oder mehrere der Endgeräte (112) eine Mobilstation ist.

8. Verfahren gemäß einem der vorangehenden Ansprüche 3 bis 7, wobei der gemeinsame Schlüssel vor dem Kombinieren durch die Endgeräte (112, 114, 116) empfangen und gespeichert wird.

9. Verfahren gemäß Anspruch 6, Anspruch 7 oder Anspruch 8, wobei der gemeinsame Schlüssel durch eine verschlüsselte drahtlose Kommunikation an die Endgeräte (112, 114, 116) gesendet wird.

10. Verfahren gemäß einem der Ansprüche 6 bis 9, wobei der gemeinsame Schlüssel einen Code umfasst, der in jedes Endgerät (112, 114, 116) durch einen Anwender oder Betreiber davon eingegeben wird.

11. Verfahren gemäß einem der vorangehenden Ansprüche, wobei der gemeinsame Schlüssel in einem sicheren Speicher (530) des Endgerätes oder in einem verschlüsselten Modul oder in einer mit dem Endgerät verknüpften Vorrichtung gespeichert wird.

12. Verfahren gemäß einem der vorangehenden Ansprüche, wobei der Identifizierer in einem Speicher des Sendeendgerätes (112) gespeichert wird und aus dem Speicher für eine Übertragung zu der Mehrzahl von Empfangsendgeräten (114, 116) abgerufen wird.

13. Verfahren gemäß einem der vorangehenden Ansprüche, wobei der Identifizierer als Teil einer Systemsteuersignalisierung in unverschlüsselter Form übertragen wird.

14. Verfahren gemäß einem der Ansprüche 1 bis 12, wobei der Identifizierer in einer verschlüsselten Nachricht übertragen wird.

15. Verfahren gemäß einem der vorangehenden Ansprüche 6 bis 14, wobei das Verfahren weiterhin die folgenden Schritte umfasst:
(i) Mitteilen einer geänderten Art eines Kombinierens an Kommunikationsendgeräte, die in dem drahtlosen Kommunikationssystem arbeiten, und Halten des gemeinsamen Schlüssels; und
(ii) Verwenden der geänderten Art eines Kombinierens, um Kommunikationen zwischen den Endgeräten zu ver- und/oder entschlüsseln.

16. Verfahren gemäß einem der Ansprüche 6 bis 15, wobei jedes Endgerät, das den gemeinsamen Schlüssel hält, befähigt ist, verschlüsselte Gruppenübertragungen verschlüsselt zu senden, unter Verwendung des Verfahrens gemäß Anspruch 1, und empfangene verschlüsselte Gruppenübertragungen zu entschlüsseln, durch das Verfahren gemäß Anspruch 2.

17. Verfahren gemäß einem der vorangehenden Ansprüche, wobei das Kommunikationssystem (100) in einer gebündelten Betriebsart (TMO) betreibbar ist.

18. Verfahren gemäß einem der vorangehenden Ansprüche, wobei das Verfahren in einer direkten Betriebsart (DMO) verwendet wird.

19. Verfahren gemäß einem der vorangehenden Ansprüche, wobei der gemeinsame Schlüssel einen statischen Codeschlüssel umfasst.

20. Verfahren gemäß einem der vorangehenden Ansprüche, wobei das System (100) eine Luftschnittstellenverschlüsselung verwendet, so dass das Verschlüsselungsverfahren und Übertragen einer Endgerätidentifizierung in derselben Schicht in einem Kommunikationsprotokollstapel arbeiten.

21. Verfahren gemäß einem der Ansprüche 1 bis 20, wobei das System (100) eine Verbindungsverschlüsselung verwendet, so dass die Sendeendgerätidentifizierung und das Verschlüsselungsverfahren bei unterschiedlichen Pegeln in dem Protokollstapel arbeiten, wobei der Kombinierschritt die Schichten des Protokollstapels miteinander vereinigt.

22. Verfahren gemäß einem der vorangehenden Ansprüche, wobei das System (100), in dem das Verfahren angewendet wird, entsprechend TETRA-Standardverfahren arbeitet.

23. Mobiles Kommunikationssystem (100), das eine Mehrzahl von Endgeräten (112, 114, 116) umfasst, wobei jedes adaptiert ist, um das Verfahren gemäß einem der vorangehenden Ansprüche durchzuführen, wobei mindestens eines der Endgeräte eine Mobilstation ist.

24. System gemäß Anspruch 23, wobei das System (100) in einer gebündelten Betriebsart (TMO) betreibbar ist.

25. System (100) gemäß Anspruch 23 oder Anspruch 24, wobei das System in einer direkten Betriebsart (DMO) betreibbar ist.

26. System (100) gemäß einem der Ansprüche 23 bis 25, wobei der gemeinsame Schlüssel einen statischen Codeschlüssel umfasst.

27. System (100) gemäß einem der Ansprüche 23 bis 26, wobei das System eine Luftschnittstellenverschlüsselung verwendet, so dass das Verschlüsselungsverfahren und Übertragen einer Endgerätidentifizierung in derselben Schicht in einem Kommunikationsprotokollstapel arbeiten.

28. System (100) gemäß einem der Ansprüche 23 bis 27, wobei das System eine Verbindungsverschlüsselung verwendet, so dass die Sendeendgerätidentifizierung und das Verschlüsselungsverfahren bei unterschiedlichen Pegeln in dem Protokollstapel arbeiten, wobei der Kombinierschritt die Schichten des Protokollstapels miteinander vereinigt.

29. System (100) gemäß einem der Ansprüche 23 bis 27, wobei das System entsprechend TETRA-Standardverfahren arbeitet.

30. Endgerät (112) für Funkverbindungen und betreibbar, um das Verfahren gemäß einem der Ansprüche 1 bis 22 durchzuführen, oder adaptiert zur Verwendung in einem System gemäß einem der Ansprüche 23 bis 29.

31. Endgerät (112) gemäß Anspruch 30, wobei das Endgerät umfasst:
einen Funksender (408, 422, 424, 402) zum Übertragen einer verschlüsselten Gruppennachricht;
Speichermittel (530) zum Speichern eines gemeinsamen Schlüssels, der mit einer Gruppe verknüpft ist, bei der das Endgerät ein Mitglied ist, und zum Speichern eines Identifizierers (520), der das Endgerät identifiziert, **dadurch gekennzeichnet, dass** der Identifizierer eine Mittelzugriffssteuerungsadresse (MAC = Mittelzugriffssteuerung) ist, die an das Sendeendgerät vergeben ist;
einen Prozessor (540), der betriebsbereit an den Sender und das Speichermittel gekoppelt ist, betreibbar, um aus einer Kombination des gemeinsamen Schlüssels und des Identifizierers einen modifizierten Verschlüsselungsschlüssel zu erzeugen; und
Verschlüsselungsmittel (550) zum Verschlüsseln der Nachricht unter Verwendung des modifizierten Verschlüsselungsschlüssels.

32. Endgerät (112) gemäß Anspruch 30 oder Anspruch 31, das umfasst:
einen Empfänger (402, 406, 408) zum Empfangen einer verschlüsselten Gruppennachricht;
Speichermittel (530) zum Speichern eines gemeinsamen Schlüssels, der mit einer Gruppe verknüpft ist, bei der das Endgerät ein Mitglied ist, und zum Speichern eines Identifizierers, der ein Endgerät identifiziert, das die Nachricht sendet, **dadurch gekennzeichnet, dass** der Identifizierer eine Mittelzugriffssteuerungsadresse (MAC = Mittelzugriffssteuerung) ist, die an das Endgerät vergeben wird, das die Nachricht sendet;
einen Prozessor (540), der betriebsbereit an den Empfänger und das Speichermittel gekoppelt ist, betreibbar, um aus einer Kombination des gemeinsamen Schlüssels und des Identifizierers einen modifizierten Verschlüsselungsschlüssel zu erzeugen; und
Entschlüsselungsmittel (550) zum Entschlüsseln der Nachricht unter Verwendung des modifizierten Verschlüsselungsschlüssels.

33. Endgerät (112) gemäß einem der Ansprüche 30 bis 32, das eine Mobilstation ist.

## Revendications

1. Procédé de fourniture de communications de groupe sécurisées dans un système de communication (100) entre une pluralité de terminaux (112, 114, 116) utilisant un protocole de cryptage qui utilise une clé de cryptage partagée dans chacun de la pluralité de terminaux du groupe, le procédé comprenant la modification d'une clé de cryptage partagée associée au groupe dans un terminal de transmission (112) pour fournir une clé de cryptage modifiée et le cryptage des informations devant être transmises par le terminal de transmission au moyen de la clé de cryptage modifiée, dans lequel la clé de cryptage partagée est modifiée en combinant la clé de cryptage partagée avec un identificateur (520) fournissant une identification unique du terminal de transmission, **caractérisé en ce que** :
(i) l'identificateur (520) est une adresse de contrôle d'accès au support (MAC) fournie au terminal de transmission (112) ; et
(ii) l'identificateur (520) est transmis dans la signalisation de contrôle par le terminal de transmission (112) grâce à une communication sans fil à une pluralité de terminaux de réception (114, 116), et est extrait et reconnu par la pluralité de terminaux de réception (114, 116).

2. Procédé de décryptage d'informations dans une communication de groupe reçues au niveau de chacun d'une pluralité de terminaux de réception (114, 116) depuis un terminal de transmission (112) dans un système de communication fournissant des communications de groupe sécurisées entre une pluralité de terminaux (112, 114, 116) dans le groupe utilisant un protocole de cryptage qui utilise une clé de cryptage partagée associée au groupe dans chacun de la pluralité de terminaux (112, 114, 116), le procédé comprenant la fourniture dans chacun de la pluralité de terminaux de réception (114, 116) d'une clé de décryptage correspondant à une clé de cryptage associée au message crypté reçu et le décryptage des informations au moyen de la clé de décryptage, la clé de décryptage étant fournie en combinant avec la clé de cryptage partagée un identificateur identifiant le terminal de transmission (112), **caractérisé en ce que** :
(i) l'identificateur (520) est une adresse de contrôle d'accès au support (MAC) fournie au terminal de transmission (112) ; et
(ii) l'identificateur est transmis dans la signalisation de contrôle par le terminal de transmission (112) grâce à une communication sans fil à la pluralité de terminaux de réception (114, 116) et est extrait et reconnu par la pluralité de terminaux de réception (114, 116).

3. Procédé selon la revendication 1 qui comprend :
(i) le terminal de transmission (112) transmettant une communication contenant des informations cryptées qui sont cryptées grâce à l'utilisation de la clé de cryptage modifiée ; et
(ii) les terminaux de réception (114, 116) recevant la communication et décryptant les informations cryptées grâce à l'utilisation d'une clé de cryptage modifiée correspondante.

4. Procédé selon l'une quelconque des revendications précédentes et dans lequel l'étape de combinaison comprend l'application d'une ou plusieurs fonctions de combinaison de signaux suivantes pour combiner l'identificateur avec la clé partagée : fonction OU exclusif (XOR), addition, multiplication.

5. Procédé selon l'une quelconque des revendications 1 à 4 et dans lequel l'étape de combinaison dudit identificateur avec la clé partagée est l'une d'une pluralité de modifications de la clé partagée pour fournir la clé de cryptage ou de décryptage modifiées.

6. Procédé selon l'une quelconque des revendications 3 à 5 et dans lequel la communication envoyée entre les terminaux comprenant le terminal de transmission (112) et les terminaux de réception (114, 116) est une communication sans fil.

7. Procédé selon la revendication 6 et dans lequel les terminaux (112, 114, 116) sont utilisables dans un système de communications mobile et un ou plusieurs des terminaux (112) est une station mobile.

8. Procédé selon l'une quelconque des revendications précédentes 3 à 7 et dans lequel la clé partagée est reçue et stockée par les terminaux (112, 114, 116) avant ladite combinaison.

9. Procédé selon la revendication 6, la revendication 7 ou la revendication 8 et dans lequel la clé partagée est envoyée aux terminaux (112, 114, 116) grâce à une communication sans fil cryptée.

10. Procédé selon l'une quelconque des revendications 6 à 9 et dans lequel la clé partagée comprend un code entré dans chaque terminal (112, 114, 116) par un de ses utilisateurs ou opérateurs.

11. Procédé selon l'une quelconque des revendications précédentes et dans lequel la clé partagée est stockée dans une mémoire sécurisée (530) du terminal ou dans un module de cryptage ou sur un dispositif associé au terminal.

12. Procédé selon l'une quelconque des revendications précédentes dans lequel l'identificateur est stocké à l'intérieur d'une mémoire du terminal de transmission (112) et est récupéré à partir de la mémoire pour être transmis à la pluralité de terminaux de réception (114, 116).

13. Procédé selon l'une quelconque des revendications précédentes et dans lequel l'identificateur est transmis comme faisant partie de la signalisation de contrôle du système sous forme non cryptée.

14. Procédé selon l'une quelconque des revendications 1 à 12 et dans lequel l'identificateur est transmis dans un message crypté.

15. Procédé selon l'une quelconque des revendications précédentes 6 à 14, le procédé comprenant en outre les étapes suivantes :
(i) la notification d'une manière de combiner modifiée à des terminaux de communication fonctionnant dans ledit système de communication sans fil et contenant la clé partagée ; et
(ii) l'utilisation de la manière de combiner modifiée pour crypter et/ou décrypter des communications entre les terminaux.

16. Procédé selon l'une quelconque des revendications 6 à 15 et dans lequel chacun des terminaux contenant la clé partagée est capable d'envoyer les transmissions de groupe cryptées, cryptées au moyen du procédé selon la revendication 1 et de décrypter les transmissions de groupe cryptées reçues grâce au procédé selon la revendication 2.

17. Procédé selon l'une quelconque des revendications précédentes et dans lequel le système de communication (100) peut fonctionner dans un mode de fonctionnement à commutation automatique de canaux (TMO).

18. Procédé selon l'une quelconque des revendications précédentes et dans lequel le procédé est utilisé dans un mode de fonctionnement direct (DMO).

19. Procédé selon l'une quelconque des revendications précédentes et dans lequel la clé partagée comprend une clé de chiffrement statique.

20. Procédé selon l'une quelconque des revendications précédentes et dans lequel le système (100) utilise le cryptage de l'interface hertzienne, de telle sorte que la procédure de cryptage et l'identification du terminal de transmission fonctionnent sur la même couche dans une pile de protocoles de communications.

21. Procédé selon l'une quelconque des revendications 1 à 20 et dans lequel le système (100) utilise un cryptage de bout en bout, de telle sorte que l'identification du terminal de transmission et la procédure de cryptage fonctionnent à des niveaux différents de la pile de protocoles, moyennant quoi l'étape de combinaison relie les couches de la pile de protocoles les unes aux autres.

22. Procédé selon l'une quelconque des revendications précédentes et dans lequel le système (100) dans lequel le procédé est appliqué fonctionne selon des procédures de norme TETRA.

23. Système de communication mobile (100) comprenant une pluralité de terminaux (112, 114, 116) conçus chacun pour réaliser le procédé selon l'une quelconque des revendications précédentes, dans lequel au moins l'un des terminaux est une station mobile.

24. Système selon la revendication 23 et dans lequel le système (100) peut fonctionner dans un mode de fonctionnement à commutation automatique de canaux (TMO).

25. Système selon la revendication 23 ou la revendication 24 et dans lequel le système peut fonctionner dans un mode de fonctionnement direct (DMO).

26. Système (100) selon l'une quelconque des revendications 23 à 25 et dans lequel la clé partagée comprend une clé de chiffrement statique.

27. Système (100) selon l'une quelconque des revendications 23 à 26 et dans lequel le système utilise le cryptage de l'interface hertzienne, de telle sorte que la procédure de cryptage et l'identification du terminal de transmission fonctionnent au niveau de la même couche dans une pile de protocoles de communications.

28. Système (100) selon l'une quelconque des revendications 23 à 27 et dans lequel le système utilise un cryptage de bout en bout, de telle sorte que l'identification du terminal de transmission et la procédure de cryptage fonctionnent à différents niveaux de la pile de protocoles, moyennant quoi l'étape de combinaison relie les couches de la pile de protocoles les unes aux autres.

29. Système (100) selon l'une quelconque des revendications 23 à 27 et dans lequel le système fonctionne selon les procédures de norme TETRA.

30. Terminal (112) de communications radio et servant à réaliser le procédé selon l'une quelconque des revendications 1 à 22 ou conçu pour être utilisé dans un système selon l'une quelconque des revendications 23 à 29.

31. Terminal (112) selon la revendication 30, le terminal comprenant :
un émetteur radio (408, 422, 424, 402) pour transmettre un message de groupe crypté ;
un moyen de mémorisation (530) pour stocker une clé partagée associée à un groupe dont le terminal est un élément et pour stocker un identificateur (520) identifiant le terminal, **caractérisé en ce que** l'identificateur est une adresse de contrôle d'accès au support (MAC) fournie au terminal de transmission ;
un processeur (540), couplé opérationnellement audit émetteur et audit moyen de mémorisation, servant à générer une clé de cryptage modifiée à partir d'une combinaison de la clé partagée et de l'identificateur ; et
un moyen de cryptage (550) pour crypter ledit message grâce à ladite clé de cryptage modifiée.

32. Terminal (112) selon la revendication 30 ou la revendication 31 et comprenant :
un récepteur (402, 406, 408) pour recevoir un message de groupe crypté ;
un moyen de mémorisation (530) pour stocker une clé partagée associée à un groupe dont le terminal est un élément et pour stocker un identificateur identifiant un terminal qui a envoyé le message, **caractérisé en ce que** l'identificateur est une adresse de contrôle d'accès au support (MAC) donnée au terminal qui a envoyé le message ;
un processeur (540), couplé opérationnellement audit récepteur et audit moyen de mémorisation, servant à générer une clé de cryptage modifiée à partir d'une combinaison de la clé partagée et l'identificateur ; et
un moyen de décryptage (550) pour décrypter le message au moyen de la clé de cryptage modifiée.

33. Terminal (112) selon l'une quelconque des revendications 30 à 32 et qui est une station mobile.
